# EUROPEAN PATENT SPECIFICATION

(11) **EP 0 653 274 B1**
(45) Date of publication and mention of the grant of the patent: **07.01.1998**
(21) Application number: 94308028.3
(22) Date of filing: 01.11.1994
(51) Int. Cl.: B27B 17/00, B27G 19/00, A01G 3/053, F16P 1/02

(54) **Improved power tool guard.**
Schutzvorrichtung für ein kraftgetriebenes Werkzeug
Protection pour outil à moteur

(30) Priority: 13.11.1993 GB 9323459
(43) Date of publication of application: 17.05.1995
(73) Proprietor: Black & Decker Inc., Newark Delaware 19711 (US)
(72) Inventor: Stones, Kevin, Bishop Auckland, County Durham DL14 6AE (GB)
(74) Representative: Stagg, Diana Christine

(56) References cited:
- EP-A- 0 422 773
- EP-A- 0 469 757
- DE-U- 8 133 139
- DE-U- 8 811 700
- DE-U- 9 206 752

## Description

The present invention relates to a guard for a power tool, in particular a guard for a hedge clipper or a chain saw.

It is know to provide guards for power tools of this type, in order to protect the operator of the tool from flying debris generated during the operation of the tool. The first guards provided were manufactured from non-transparent material and, while they provide acceptable protection for the operator, they have the disadvantage that a substantial part of the working area is obscured from the operator.

In an alternative known design, the guard is made from transparent material. While this overcomes the disadvantage of obscuring part of the working area, it does have the disadvantage that the operator can see not only the working area but the surrounding parts of the tool body.

In a further alternative design, the guard has been manufactured from non-transparent material, but the central region has been made of mesh. This has the disadvantages that it is expensive to manufacture, because of high tooling costs, and the protection for the operator is reduced by the fact that fine debris, such as small twigs and other similar material, can pass through the holes in the mesh.

It is an object of the present invention to provide a guard for a power tool in which the above disadvantages are reduced or substantially obviated.

The present invention provides a guard for mounting on a power tool, which guard is of one piece construction and comprises a central transparent region surrounded by an outer non-transparent region, and is adapted for mounting on the power tool.

The guard according to the invention is of one-piece construction, which is advantageous for cost and strength; avoids the possibility of the transparent portion falling out, and provides maximum clarity.

The guard according to the invention is preferably manufactured from synthetic plastics material, and suitable materials include polycarbonate, styrene-acrylo-nitrile (SAN), polypropylene; acrylonitrile-butadiene-styrene (ABS) and styrene.

The guard according to the invention is preferably manufactured by a moulding process, in particular injection moulding. The non-transparent portion is made non-transparent by texturing the surface on both sides in the mould, suitably by spark erosion or chemical deposition. It is a requirement of the moulding process that the areas of the mould which correspond to the central transparent region have highly polished surfaces.

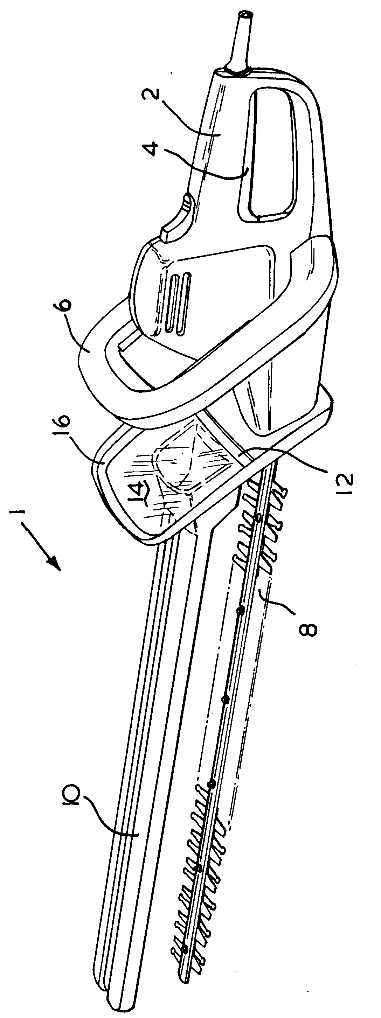

An embodiment of a guard according to the invention will now be described with reference to the accompanying drawing, which is a perspective view of a hedge trimmer on which an embodiment of a guard according to the invention is mounted.

The hedge clipper (1) comprises a housing (2) in which are mounted a switch trigger (4) and secondary handle (6). Cutting blades (8) extend from the housing (2) and are provided with a cover (10) for use when the hedge clipper is not in operation.

A guard (12) is mounted on the hedge clipper (1) and comprises a central transparent region (14) surrounded by a non-transparent frame region (16).

In use, the operator activates the blades (8) of the hedge clipper (1) by means of the switch (4) and is able to observe the cutting action of the blades (8) through the transparent region (14) of the guard (12).

## Claims

1. A guard (12) for mounting on a power tool (1), characterised in that the guard (12) is of one piece construction, and comprises a central transparent region (14) surrounded by an outer non-transparent region (16) and is adapted for mounting on the power tool (1).

2. A guard according to claim 1 characterised in that it is manufactured from synthetic plastics material.

3. A guard according to claim 2 characterised in that the synthetic plastics material is polycarbonate; styrene-acrylo-nitrile (SAN); polypropylene; acrylonitrile-butadiene-Styrene (ABS) or styrene.

4. A guard according to claim 2 or claim 3 characterised in that it is manufactured by a moulding process.

5. A guard according to claim 4 characterised in that the non-transparent region (16) is manufactured in the mould by spark erosion or chemical deposition.

6. A power tool characterised in that a guard according to any of claims 1 to 6 is mounted on the tool.

## Patentansprüche

1. Schutzschild (12) zur Anbringung an einem kraftgetriebenen Werkzeug (1), **dadurch gekennzeichnet**, daß das Schutzschild (12) einen einteiligen Aufbau hat und einen mittleren durchsichtigen Abschnitt (14) aufweist, der von einem äußeren undurchsichtigen Abschnitt (16) umgeben ist, und zur Anbringung an dem kraftgetriebenen Werkzeug (1) ausgestaltet ist.

2. Schutzschild nach Anspruch 1, **dadurch gekennzeichnet**, daß es aus einem synthetischen Kunststoffmaterial hergestellt ist.

3. Schutzschild nach Anspruch 2, **dadurch gekennzeichnet**, daß das synthetische Kunststoffmaterial Polycarbonat, Styrolacrylnitril (SAN), Polypropylen, Acrylnitril-Butadien-Styrol (ABS) oder Styrol ist.

4. Schutzschild nach Anspruch 2 oder Anspruch 3, **dadurch gekennzeichnet**, daß es durch ein Formverfahren hergestellt ist.

5. Schutzschild nach Anspruch 4, **dadurch gekennzeichnet**, daß der undurchsichtige Abschnitt (16) in der Form durch Funkenerosion oder chemische Ablagerung hergestellt ist.

6. Kraftgetriebenes Werkzeug, **dadurch gekennzeichnet**, daß ein Schutzschild nach einem der Ansprüche 1 bis 6 am Werkzeug angebracht ist.

## Revendications

1. Dispositif de protection (12) destiné à être monté sur un outil (1), caractérisé en ce que le dispositif de protection (12) est une structure d'un seul tenant et comprend une partie centrale transparente (14) entourée par une partie extérieure non transparente (16) et est adapté pour être monté sur l'outil à moteur (1).

2. Dispsitif de protection selon la revendication 1, caractérisé en ce qu'il est fabriqué en une matière plastique synthétique.

3. Dispositif de protection selon la revendication 2, caractérisé en ce que la matière plastique synthétique est du polycarbonate ; du styrène-acrylonitrile (SAN) ; du polypropylène ; de l'acrylonitrile-butadiène-styrène (ABS) ou du styrène.

4. Dispositif de protection selon la revendication 2 ou 3, caractérisé en ce qu'il est fabriqué au moyen d'un procédé de moulage.

5. Dispositif de protection selon la revendication 4, caractérisé en ce que la partie non transparente (16) est fabriquée dans le moule par électroérosion ou par dépôt chimique.

6. Outil à moteur caractérisé en ce qu'un dispositif de protection selon l'une quelconque des revendications 1 à 6 est monté sur l'outil.
